(19) Europäisches Patentamt
European Patent Office
Office européen des brevets

(11) **EP 1 986 061 A1**

(12) **DEMANDE DE BREVET EUROPEEN**

(43) Date de publication:
**29.10.2008 Bulletin 2008/44**

(51) Int Cl.:
***G05B 17/02*** *(2006.01)*

(21) Numéro de dépôt: **08290367.5**

(22) Date de dépôt: **14.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **23.04.2007 FR 0702939**

(71) Demandeur: **IFP**
**92852 Rueil-Malmaison Cédex (FR)**

(72) Inventeurs:
• **Guet, Sébastien**
**92250 La Garenne Colombe (FR)**
• **Decarre, Sandrine**
**92500 Rueil-Malmaison (FR)**
• **Line, Alain**
**31320 Castanet-Tolosan (FR)**

(54) **Méthode pour dimensionner des installations industrielles où un mélange diphasique gaz-liquide d'écoule en régime intermittent**

(57)     On modélise l'écoulement de chaque phase au sein d'une poche de gaz et d'un bouchon liquide à l'aide de modèles physiques. On modélise également le flux de gaz entraîné en arrière d'une poche de gaz à l'aide d'un modèle physique. Pour ce modèle on considère que la variation de pression entre l'arrière d'une poche de gaz et un bouchon de liquide en arrière de cette poche est responsable de l'entraînement, et on prend en compte une condition critique de formation du flux de gaz entraîné. On détermine alors les pertes de charges au sein de la conduite à l'aide d'une méthode itérative dans laquelle on ajuste ce flux de gaz entraîné ainsi modélisé, avec un flux de gaz moyen obtenu par une équation de conservation des flux en écoulement intermittent établi. On en déduit les dimensions des installations industrielles qui minimisent les pertes de charges.

Application au transport de fluides pétroliers et particulièrement au dimensionnement des conduites de production, risers...

Fig. 1

## Description

La présente invention concerne le domaine de l'extraction et du transport d'effluents pétroliers.

En particulier, l'invention concerne une méthode pour dimensionner des installations industrielles où des effluents pétroliers, comportant une phase liquide et une phase gazeuse, s'écoulent en régime intermittent.

## Présentation de l'art antérieur

Dans l'industrie pétrolière, il est très important de dimensionner correctement les installations industrielles d'extraction et de transport d'effluents pétroliers. Pour ce faire, il est nécessaire de prévoir les pertes de charge dues aux écoulements polyphasiques dans ce type de conduites.

Généralement, l'écoulement d'effluents pétroliers est un écoulement comprenant une phase liquide et une phase gazeuse. Cet écoulement diphasique peut alors présenter différents régimes :

- écoulement stratifié (« stratified flow ») : c'est un écoulement à phases séparées.

- écoulement dispersé (« dispersed flow ») : il s'agit par exemple d'un écoulement de liquide dans lequel se forme des bulles.

- écoulement annulaire (« annular flow ») : c'est un écoulement à phases séparées dans lequel le liquide mouille complètement la paroi en formant un film annulaire autour de l'écoulement de gaz.

- écoulement intermittent ou à poches et bouchons (« slug flow »).

L'invention concerne plus particulièrement ce dernier type d'écoulement. Un écoulement intermittent est observé pour des débits de gaz et de liquide "moyens". Sa structure présente une succession de poches de gaz, appelées poches de Taylor, et de bouchons de liquide qui peuvent contenir de petites bulles de gaz. C'est une configuration mixte entre un écoulement stratifié et un écoulement dispersé.

Dans cette configuration il peut se produire un phénomène d'entraînement de gaz, le gaz étant entraîné depuis la poche de gaz vers le bouchon liquide sous la forme de bulles millimétriques. La fraction de gaz dans le bouchon liquide dépend alors du flux de gaz entraîné en arrière de la poche. L'arrière de la poche est défini relativement au sens d'écoulement de l'effluent (écoulement de l'arrière vers l'avant). L'arrière correspond ainsi à l'amont (l'aval étant l'avant).

Pour parvenir à estimer les pertes de charge de ce type d'écoulement (diphasique intermittent), il est nécessaire de calculer le taux de vide moyen, qui fait lui même intervenir le taux de vide dans les poches de gaz et le taux de vide moyen dans les bouchons de liquide. On appelle taux de vide d'un mélange gaz / liquide le rapport entre le volume occupé par le gaz et le volume total du mélange.

Pour calculer le taux de vide dans le bouchon liquide il est connu d'utiliser une corrélation empirique. Parmi les publications récentes utilisant cette approche, on peut citer :

- Felizola, H., Shoham, O. 1995. A unified model for slug flow in upward inclined pipes. Journal of Energy Ressources and Technology, 117, pp 7-12.

- Gomez, L.E., Shoham, O., Taitel, Y. 2000. Prediction of slug liquid holdup: horizontal to upward vertical flow. International Journal of Multiphase Flow, 26, pp 517-521.

On connaît également une méthode basée sur des modèles physiques pour calculer le taux de vide dans le bouchon de liquide et la poche de gaz. Cette méthode emploie un modèle physique pour le flux de gaz entraîné en arrière de la poche de gaz (dans un repère se déplaçant à la vitesse de la poche). Dans cette méthode, le modèle de flux de gaz entraîné est basé sur l'hypothèse qu'un jet turbulent de liquide, présent en arrière de la poche, est responsable de l'entraînement de gaz. Cependant, comme le montre le document suivant, les résultats associés à différentes propriétés des fluides en présence montrent qu'il peut conduire à des incohérences et ne donne pas une description fine du taux de vide.

- Brauner, N, Ullmann, A. 2004. Modelling of gas entrainment from Taylor bubbles. Part A: slug flow. International Journal of Multiphase flow, 30, pp 239-272.

En somme, aucune méthode ne permet d'estimer les pertes de charge d'un d'écoulement diphasique intermittent de façon précise, et en particulier aucune méthode ne tient compte des effets d'entraînement de gaz en arrière de la poche de gaz. Ces effets sont importants car l'aération du bouchon liquide influence de manière significative les pertes de charge. Or, la détermination des pertes de charge est indispensable pour déterminer les dimensions d'installations telles que des conduites d'effluents pétroliers.

Ainsi, l'objet de l'invention est une méthode pour dimensionner des installations industrielles où des effluents pétroliers, comportant une phase liquide et une phase gazeuse, s'écoulent en régime intermittent. Au cours de cette méthode, on estime des pertes de charges au sein des installations (conduite d'extraction, conduite de transport d'effluents...) en tenant compte des effets d'arrachement de gaz en arrière de la poche de gaz.

**La méthode selon l'invention**

L'invention concerne une méthode pour dimensionner des installations industrielles où un mélange diphasique comportant une phase liquide et une phase gazeuse s'écoule selon une configuration comportant une succession de bouchons de liquide et de poches de gaz en arrière desquelles du gaz est entraîné, dans laquelle on modélise l'écoulement de chaque phase au sein d'une poche de gaz et l'écoulement de chaque phase au sein d'un bouchon de liquide à l'aide d'un premier modèle physique, et on modélise le flux de gaz entraîné à l'aide d'un second modèle physique. La méthode comporte les étapes suivantes :

- on définit le second modèle physique dans lequel ledit flux de gaz entraîné est proportionnel à une variation de pression entre une poche de gaz et un bouchon de liquide en arrière de cette poche, et dans lequel on prend en compte une condition critique de formation dudit flux de gaz entraîné, définie par une variation de pression telle que des forces de pression engendrées par cette variation de pression soient supérieures à des forces de tension superficielle entre le gaz et le liquide ;

- on initialise et calibre ledit second modèle à l'aide de mesures expérimentales ;

- on détermine un gradient de pression dans la poche, un gradient de pression dans le bouchon et le rapport d'une longueur de poche de gaz sur une longueur de bouchon de liquide, à l'aide d'une méthode itérative dans laquelle on ajuste un flux de gaz entraîné $\psi_{G,ent}$, calculé à l'aide dudit second modèle, avec un flux de gaz moyen $\psi_G$ obtenu par une équation de conservation des flux en écoulement intermittent établi à partir dudit premier modèle d'écoulement physique,

- on détermine des pertes de charges au sein des installations industrielles à l'aide desdits gradients de pression et dudit rapport, et

- on détermine les dimensions des installations industrielles de façon à minimiser lesdites pertes de charges.

Selon l'invention, on peut déterminer le flux de gaz entraîné $\psi_{G,ent}$ en considérant qu'une proportion $K_{\Delta P}$ du travail effectué par les forces de pression est utilisée pour l'entraînement de gaz. On peut également, pour déterminer le flux de gaz entraîné $\psi_{G,ent}$, prendre en compte une valeur maximale du flux de gaz entraîné via une hypothèse d'écoulement homogène et sans glissement.

Le premier modèle physique peut comporter soit un modèle d'écoulement stratifié basé sur l'égalité des gradients de pression dans les deux phases, soit un modèle d'écoulement annulaire basé sur l'égalité des gradients de pression dans les deux phases. Il peut en plus comporter un modèle de type flux de dérive.

Un critère d'arrêt pour la méthode itérative peut être défini par le critère de convergence suivant :

$$\left| \frac{\psi_{G,ent} - \psi_G}{\psi_G} \right| < 10^{-3}.$$

Selon l'invention, on détermine les dimensions des installations industrielles en déterminant des pertes de charges pour différentes valeurs de propriétés géométriques données d'installations, et l'on sélectionne les installations ayant les propriétés géométriques minimisant les pertes de charges.

Cette méthode est particulièrement bien adaptée au dimensionnement d'installations industrielles telles que de la conduite d'effluents pétroliers, ou des équipements de séparation pétrolière de type *"Slug Catcher"*. Dans ce dernier cas, on détermine les dimensions de ces équipements de séparation en déterminant des fractions de gaz et de liquide et des longueurs relatives d'une poche et d'un bouchon liquide.

D'autres caractéristiques et avantages de la méthode selon l'invention, apparaîtront à la lecture de la description ci-après d'exemples non limitatifs de réalisations, en se référant aux figures annexées et décrites ci-après.

**Présentation sommaire des figures**

- la figure 1 est un schéma présentant les différentes étapes de la méthode d'évaluation des pertes de charges.

- la figure 2 illustre le principe du modèle physique de l'entraînement du flux de gaz.

- la figure 3 montre une prédiction du taux de vide moyen en fonction de la mesure, pour un écoulement de condensât en conduite inclinée à θ = $45^0$.

- la figure 4 montre une prédiction du taux de vide moyen en fonction de la mesure, pour un écoulement de condensât en conduite inclinée à θ = $75°$.

**Description détaillée de la méthode**

L'invention concerne une méthode pour dimensionner des installations industrielles dans lesquelles un mélange diphasique, comportant une phase liquide et une phase gazeuse, s'écoule selon un écoulement intermittent, c'est-à-dire un écoulement comportant une succession de poches de gaz et de bouchons de liquide et dans lequel un flux de gaz est entraîné en arrière des poches de gaz. L'arrière de la poche est défini relativement au sens d'écoulement (écoulement de l'arrière vers l'avant).

La méthode comporte une modélisation physique de ce type d'écoulement, puis une estimation des pertes de charge au sein de la conduite. Enfin, on déduit le dimensionnement adéquat des installations à partir des pertes de charge.

La méthode est basée sur l'égalité entre le flux de gaz entraîné en arrière de la poche de gaz et le flux de gaz obtenu par l'équation de conservation des flux en écoulement intermittent établi. La poche de gaz de l'écoulement est modélisée à l'aide d'un modèle d'écoulement stratifié et la zone de bouchon liquide est modélisée par une approche des flux de dérive. Le flux de gaz entraîné en arrière de poche est formulé à l'aide d'une approche physique faisant intervenir les vitesses et taux de vide dans les différentes zones de l'écoulement. L'égalité entre les flux de gaz permet de fermer le problème et d'obtenir le taux de vide moyen.

Dans un premier temps, les modèles physiques permettant de modéliser les écoulements sont présentés. Puis la méthode itérative permettant de déterminer des pertes de charges est décrite.

**Modélisation physique d'écoulements intermittents gaz - liquide**

L'invention concerne les écoulements diphasique gaz - liquide de type intermittent. On rappelle qu'un écoulement intermittent est séparé en deux zones : une poche de gaz (P) et un bouchon de liquide (B). Pour modéliser de tels écoulements, on les caractérise par les paramètres suivants :

Concernant la poche de gaz :

la vitesse de la poche de gaz $V_P$

le taux de vide moyenné sur la section poche $R_{GP}$

le taux de liquide dans la poche $R_{LP}$

la vitesse moyenne du gaz dans la poche $V_{GP}$

la vitesse moyenne du liquide dans la poche $V_{LP}$

Concernant le bouchon de liquide :

le taux de vide moyenné sur la section bouchon $R_{GB}$

le taux de liquide dans le bouchon $R_{LB}$

la vitesse moyenne du gaz dans le bouchon $V_{GB}$

la vitesse moyenne du liquide dans le bouchon $V_{LB}$

Ainsi que :

le taux de vide moyenné sur la section totale $R_G$

le taux de liquide moyenné sur la section totale $R_L$

Selon l'invention, on réalise une modélisation physique des écoulements intermittents gaz - liquide, en définissant trois modèles physiques :

- un premier modèle physique (MP) décrivant l'écoulement de chaque phase au sein d'une poche de gaz (P),

- un second modèle physique (MB) décrivant l'écoulement de chaque phase au sein d'un bouchon de liquide (B),

- un troisième modèle physique (MF) décrivant le flux de gaz entrainé en arrière de la poche.

<u>Modèle physique (MP) décrivant l'écoulement dans la poche de gaz (P)</u>

On modélise l'écoulement dans la poche de gaz (P) à l'aide d'un modèle physique faisant intervenir le taux de vide dans la poche ($R_{GP}$), le taux de liquide dans la poche ($R_{LP}$), la vitesse moyenne du gaz dans la poche ($V_{GP}$) et la vitesse moyenne du liquide dans la poche ($V_{LP}$).
Selon l'invention, on considère que l'écoulement de gaz dans la poche de gaz est de type stratifié en conduite inclinée ou annulaire en conduite verticale. Le modèle est alors basé sur l'égalité des gradients de pression dans les deux phases. En combinant les équations de conservation de la quantité de mouvement pour le gaz et pour le liquide afin d'éliminer le gradient de pression, il vient :

$$\frac{pe}{S}\left[R_{LP}\tau_{GP}\chi_{GP} - R_{GP}\tau_{LP}\chi_{LP} + \tau_{GLP}\chi_{GLP}\right] - \Delta\rho R_{GP}R_{LP}g\sin\theta = 0 \,. \tag{8}$$

Avec :

pe : le périmètre de la conduite
$S$ : la section de la conduite
$\chi_{LP}$ : le périmètre mouillé par le liquide (adimensionnel)
$\chi_{GP}$ : le périmètre mouillé par le gaz (adimensionnel)
$\chi_{GLP}$ : le périmètre interfacial gaz - liquide (adimensionnel)
$\tau_{LP}$ : la contrainte pariétale due au liquide. Elle est fonction de $V_{LP}, R_{LP}, \chi_{LP}$
$\tau_{GP}$ : la contrainte pariétale due au gaz . Elle est fonction de $V_{GP}, R_{LP}, \chi_{GP}$
$\tau_{GLP}$ : la contrainte interfaciale gaz - liquide dans la zone d'écoulement stratifié. Elle est fonction de $V_{GP}, R_{LP}, \chi_{GLP}$
$\Delta\rho$ : différence des densités [kg/m³]
θ : angle de la conduite avec l'horizontale [rad]

De plus, la vitesse de la poche de gaz, $V_P$, est calculée par la relation suivante :

$$V_P = C_P U_m + V_{drift,P} \,, \tag{7}$$

avec :

D :          diamètre de la conduite          [m]

$U_m$ :          vitesse superficielle du mélange

$V_{drift,P}$ :          vitesse relative de la poche par rapport au mélange

et où le coefficient Cp et la vitesse $V_{drift,P}$ sont fonction de $U_m, \theta, D,$ et sont donnés par des modèles de la littérature, tels que ceux décrits dans les documents suivants :

Fabre J., Liné A. 1996. Slug flow modelling. *International encyclopaedia of heat and mass transfer.* Innodata corp., 1015-1021.

Modèle physique (*MB*) décrivant l'écoulement dans le bouchon de liquide (B)

On modélise l'écoulement dans le bouchon de liquide (B) à l'aide d'un modèle physique faisant intervenir le taux de vide dans le bouchon ($R_{GB}$) et la vitesse moyenne du gaz dans le bouchon ($V_{GB}$).

Dans le bouchon liquide, la vitesse de la dispersion de bulles, c'est-à-dire la vitesse moyenne du gaz dans le bouchon liquide (B), peut être modélisée par une approche des flux de dérive (« drift-flux »). Cette approche est décrite par exemple dans le document suivant :

Zuber, N., Findlay, J.A. 1965. Average volumetric concentration in two-phase flow systems. J. Heat Transfer Trans. ASME Ser., 87, pp 453-468.

Suivant ce modèle, on écrit :

$$V_{GB} = C_{0B}U_m + V_{drift} ,\tag{6}$$

où $C_{0B}$, fonction de $R_{GB}$ et $\theta$, et $V_{drift}$, fonction de $\theta$, sont donnés par des modèles de la littérature. On peut se référer par exemple à :

Guet, S., Ooms, G., Oliemans, R.V.A., Mudde, R.F. 2004. Bubble size effect on low liquid input drift flux parameters. Chemical Engineering Science, 59, pp 3315-3329.

Modèle physique décrivant le flux de gaz entraîné en arrière de la poche

Le flux de gaz entraîné en arrière de la poche de gaz (P) est modélisé à l'aide d'un modèle physique. On rappelle que l'arrière de la poche est défini relativement au sens d'écoulement (écoulement de l'arrière vers l'avant).

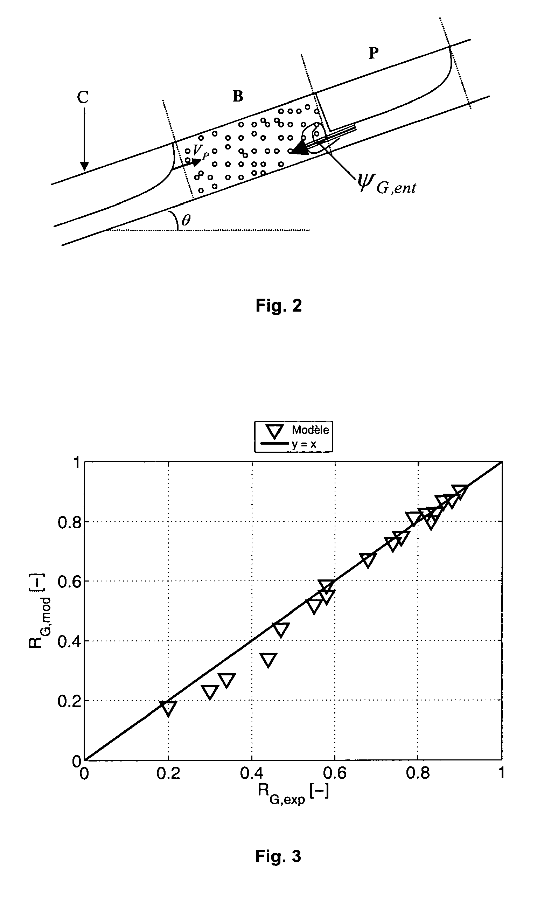

La figure 2 illustre le principe du modèle physique du flux de gaz entraîné $\psi_{G,ent}$ selon l'invention : l'écoulement dans la conduite C, inclinée d'un angle $\theta$ avec l'horizontale, comporte deux sections : une poche de gaz (P) avançant à la vitesse $V_P,$ et un bouchon de liquide (B).

On fait l'hypothèse que l'écoulement est développé et à l'état d'équilibre. Les flux de gaz et de liquide sont alors équivalents à chaque frontière de l'écoulement.

En écoulement établi, ce flux de gaz entraîné $\psi_{G,ent}$ est équivalent aux flux de gaz calculés par bilan sur chaque section (P et B) de l'écoulement ($\psi_{GP}$ et $\psi_{GB}$), et au flux de gaz moyen $\psi_G$. Le flux de gaz moyen est le flux de gaz obtenu par l'équation de conservation des flux en écoulement intermittent établi : $\psi_G = R_G (V_P - V_G)$, $V_G$ étant la vitesse moyenne du gaz.

$$\psi_G = \psi_{GP} = \psi_{GB} = \psi_{G,ent} .\tag{1}$$

Les flux de gaz sont donnés par :

$$\begin{cases} \psi_G = R_G(V_P - V_G) \\ \psi_{GB} = R_{GB}(V_P - V_{GB}) \\ \psi_{GP} = R_{GP}(V_P - V_{GP}) \end{cases} \quad (2)$$

Ces flux sont donnés dans un référentiel se déplaçant à la vitesse de poche $V_P$. Le modèle selon l'invention emploie le même type d'égalité sur les flux pour la phase liquide :

$$\psi_L = \psi_{LP} = \psi_{LB}. \quad (3)$$

Les flux de liquide sont donnés par :

$$\begin{cases} \psi_L = R_L(V_P - V_L) \\ \psi_{LB} = R_{LB}(V_P - V_{LB}) \\ \psi_{LP} = R_{LP}(V_P - V_{LP}) \end{cases} \quad (4)$$

Les taux de vide et de liquide sont par ailleurs liés par les égalités :

$$\begin{cases} R_G + R_L = 1 \\ R_{GP} + R_{LP} = 1 \\ R_{GB} + R_{LB} = 1 \end{cases} \quad (5)$$

Dans certaines conditions, du gaz est entraîné depuis la poche de gaz vers le bouchon liquide sous la forme de bulles millimétriques. Ceci conduit à une valeur non nulle du taux de vide dans le bouchon liquide ($R_{GB} \neq 0$). Dans un repère mobile se déplaçant à la vitesse de la poche ($V_P$), le flux de gaz entraîné est noté $\psi_{G,e}$. Les vitesses moyennes des phases étant très différentes dans la zone de poche de gaz et dans la zone de bouchon liquide, les effets d'entraînement de gaz peuvent être attribués à deux phénomènes :

- l'agitation turbulente dans le liquide dans la zone arrière de la poche, en raison du jet turbulent de liquide (Brauner et Ullmann, 2004),
- le saut de pression hydrodynamique, nécessaire pour accélérer le liquide depuis la poche de gaz jusqu'au bouchon de liquide.

Selon l'invention le flux $\psi_{G,e}$ de gaz entraîné en arrière de la poche de gaz (P) est modélisé à l'aide d'un modèle physique ($MF$). Dans ce modèle, on considère que ce flux est proportionnel à une source d'énergie et que le saut de pression en arrière de poche est la source d'énergie responsable de l'entraînement de gaz en arrière de poche. Le saut de pression nécessaire pour accélérer le liquide entre la poche de gaz et le bouchon est donné par : $\Delta P = \rho_L \psi_L (V_{LB} - V_{LP})$. L'aération du bouchon liquide est gouvernée par une compétition entre cette force de pression $\Delta P$ et la force due à la tension superficielle, $\tau = \dfrac{\sigma}{d_{Max}}$.

$\sigma$ :     tension superficielle gaz - liquide       [N/m]

$d_{Max}$ :     taille maximale des bulles

Par ailleurs à faibles vitesses débitantes il est fréquent que le bouchon liquide ne soit pas aéré, donc le flux de gaz entraîné est nul. La limite d'existence de l'entraînement est décrite par le rapport de ces deux forces,

$$\left[\frac{\Delta P}{\tau_\sigma}\right]_c = \left[\frac{\Delta P d_{Max}}{\sigma}\right]_c = \frac{d_{Max}}{D}\left[\frac{D\Delta P}{\sigma}\right]_c.$$

On définit une valeur critique $\Delta P_c$ telle que seul l'excès d'énergie présent par rapport à cette valeur critique, c'est à dire $\Delta P > \Delta P_c$, conduit à de l'entraînement de gaz.

En considérant qu'une proportion $K_{\Delta P}$ du travail effectué par les forces de pression est utilisée pour l'entraînement de gaz et en incluant de plus les conditions critiques d'entraînement de gaz en arrière de poche, le flux de gaz entraîné s'exprime par :

$$\psi_{G,e} = \frac{K_{\Delta P}}{6}\frac{d_{Max}}{\sigma}\left(\Delta P - \Delta P_c\right) \qquad (9)$$

Le paramètre $K_{\Delta P}$ ainsi que la valeur critique du saut de pression $\Delta P_c$ nécessaire pour accélérer le liquide entre la poche de gaz et le bouchon sont déterminés de manière spécifique.

*Détermination de la constante $\Delta P_c$*

Le saut de pression critique $\Delta P_c$ est spécifique à chaque calcul de flux de gaz entraîné. Il est déterminé par le modèle.

On applique la considération suivante : s'il n'y a pas de gaz, la vitesse superficielle du gaz dans la conduite est nulle ($U_G = 0$) et le bouchon de liquide n'est pas aéré. Donc lorsque $U_G = 0$ le flux de gaz entraîné doit vérifier $\psi_{Ge} = \psi_G = 0$ et $\Delta P = \Delta P_c$. Comme $U_G = 0$ dans ces conditions la vitesse du mélange est égale à la vitesse superficielle du liquide ($U_L = U_m$).

Pour chaque condition d'écoulement considérée par le modèle une valeur critique $\Delta P_c$ est en un premier temps calculée. Pour ce faire, on applique les modèles MB et MP en imposant $\psi_{Ge} = \psi_G = 0$ pour $U_L = U_m$. Les valeurs des vitesses du liquide dans le bouchon et dans la poche sont alors obtenues ($V_{LB,C}$ et $V_{LP,c}$). Le flux de liquide critique associé est donné par $\psi_{L,c} = V_P - U_L$. Puis le saut de pression associé est calculé : $\Delta P_c = \rho_L\psi_{L,c}(V_{LB,c} - V_{LP,c})$. On obtient ainsi une valeur de saut de pression $\Delta P$ correspondant à la valeur du saut de pression critique $\Delta P_c$. La valeur de la constante $\Delta P_c$ est donc spécifique à chaque calcul, et doit être calculée en un premier temps.

*Détermination de la constante $K_{\Delta P}$*

*La valeur de $K_{\Delta P}$* est obtenue à partir de données expérimentales représentatives d'un écoulement d'un fluide de propriétés données dans une conduite de géométrie connue. En utilisant l'égalité des flux de gaz $\psi_G = \psi_{G,e}$,

$$K_{\Delta P} = \frac{6\,\sigma\,\psi_G}{d_{Max}\left(\Delta P - \Delta P_c\right)} = f(\psi_G,\psi_L,\sigma,d_{Max},\Delta P_c,V_{LP},V_{LB})$$

La constante $K_{\Delta P}$ est ainsi déterminée en utilisant des mesures expérimentales de flux de gaz et de liquide, $\psi_G$ et $\psi_L$. Pour ce faire une campagne de mesures expérimentales doit être conduite. Des données expérimentales sont collectées en conditions d'écoulement intermittent concernant : la vitesse de poche $V_P$ et le taux de vide $R_G$. Les flux de gaz et de liquide sont alors déterminés expérimentalement : $\psi_G = R_G V_P - U_G$ et $\psi_L = R_L V_P - U_L$. Les modèles de calcul MP et MB sont appliqués pour déterminer les valeurs de $\Delta P_c$, $V_{LP}$ et $V_{LB}$ associées aux points expérimentaux considérés.

La valeur de la constante $K_{\Delta P}$ ainsi obtenue est indépendante des conditions de vitesse débitante, et dépend essentiellement du diamètre de la conduite et des propriétés des fluides considérés (tension superficielle et niveau de contamination du liquide). Une valeur obtenue à l'aide de données expérimentales représentatives des conditions industrielles considérées (concernant le diamètre et les propriétés des fluides) peut de ce fait être appliquée à des calculs de flux de gaz entraîné en conditions d'écoulement industriel.

Enfin, selon l'invention, on considère que le flux de gaz entraîné ne peut pas dépasser une valeur maximale, notée $\psi_{G,Max}$. En effet, la poche de gaz présente une vitesse ascendante positive et supérieure à la vitesse moyenne du gaz dans le bouchon. Le taux de vide moyen $R_G$ est donc toujours inférieur au taux de vide obtenu avec une hypothèse d'écoulement homogène sans glissement $R_{G,nos}$ : $R_G < R_{G,nos} = \dfrac{U_G}{U_m}$. $U_G$ est la vitesse superficielle du gaz. Comme par définition $R_G$ et $V_G$ sont positifs,

$$R_{G,nos}V_G > R_GV_G = U_G > 0 . \qquad (10)$$

Donc le flux de gaz doit vérifier :

$$\psi_G = R_G(V_P - V_G) < R_{G,nos}(V_P - V_G) < R_{G,nos}V_P - U_G . \qquad (11)$$

Le flux de gaz a donc une valeur maximale :

$$\psi_{G,Max} = R_{G,nos}V_P - U_G . \qquad (12)$$

Dans notre modèle, ce critère est appliqué en utilisant :

$$\psi_{G,ent} = \min\left(\psi_{G,Max}, \psi_{G,e}\right) \qquad (13)$$

Fermeture du problème

Ainsi, selon l'invention on modélise de façon physique un écoulement intermittent gaz - liquide au sein d'une conduite à l'aide de onze relations indépendantes :

- une relation pour la vitesse de poche (équation 7) ;

- trois relations pour le flux de gaz (équation 1) ;

- deux relations pour le flux de liquide (équation 3) ;

- deux modèles hydrodynamiques adaptés aux deux zones de l'écoulement (équations 7 et 8) ;

- trois relations pour lier le taux de vide et le taux de liquide dans chaque partie de l'écoulement (équation 5).

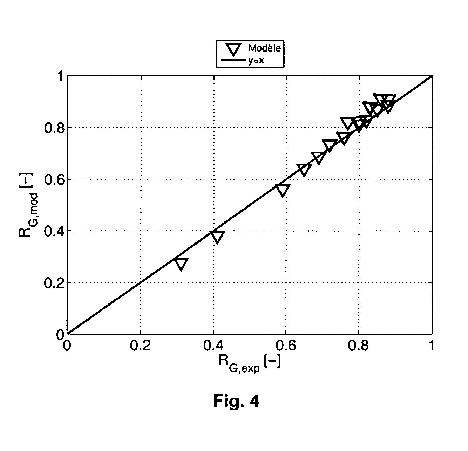

Les figures 3 et 4 illustrent l'efficacité de la méthode pour déterminer le flux de gaz entraîné, et par conséquent le taux de vide moyen :

La figure 3 montre une comparaison entre des mesures expérimentales de taux de vide moyen ($R_{G,exp}$) et la prédiction associée ($R_{G,mod}$) pour un écoulement de condensât en conduite inclinée avec θ = 45° et à forte pression (40 bar). La valeur expérimentale est reportée en abscisse, et la prédiction associée est reportée en ordonnée. La bissectrice $y = x$ est aussi représentée.

La figure 4 montre une comparaison entre des mesures expérimentales de taux de vide moyen ($R_{G,exp}$) et la prédiction associée ($R_{G,mod}$) pour un écoulement de condensât en conduite inclinée avec θ = 75° et à faible pression (10 bar). La valeur expérimentale est reportée en abscisse, et la prédiction associée est reportée en ordonnée. La bissectrice $y = x$ est aussi représentée.

Les valeurs expérimentales sont issues du document suivant :

Fernschneider G. 1982. *Écoulements gaz-liquide à poches et bouchons dans les conduits de section circulaire.* Thèse de doctorat, Institut National Polytechnique de Toulouse, France.

**Estimation des pertes de charge au sein de la conduite**

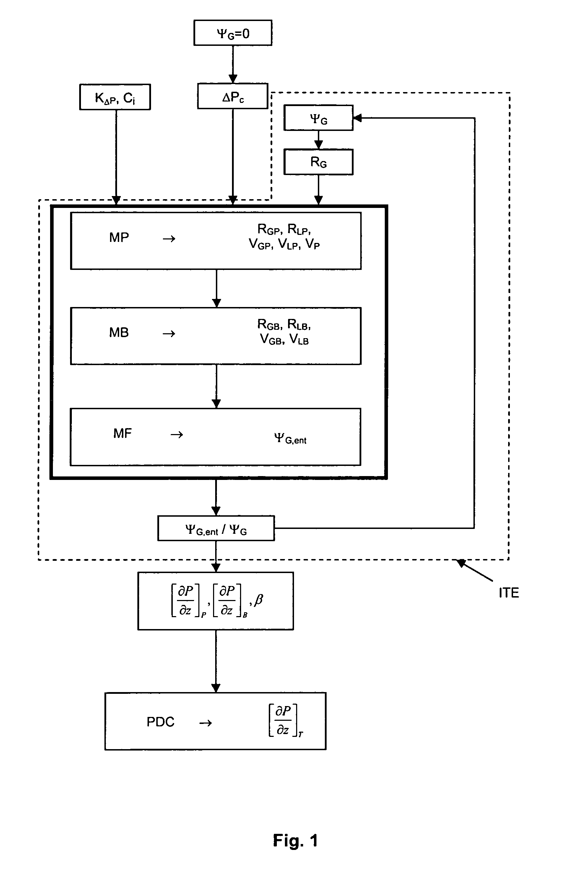

La figure 1 illustre les étapes de la méthode. Les onze inconnues sont :

$$(V_P, R_{GB}, R_{GP}, R_{LB}, R_{LP}, V_{GB}, V_{GP}, V_{LB}, W_{LP}, R_G, R_L).$$

Ces onze inconnues sont déterminées avec les onze relations indépendantes qui constituent le modèle physique d'écoulement. Une méthode itérative est employée pour résoudre le problème. A cet effet une méthode de relaxation du flux de gaz moyen $\psi_G$ est appliquée à chaque itération.

*Initialisation*

Il est nécessaire de définir une valeur initiale du flux de gaz moyen $\psi_G$. Cette valeur initiale n'a pas d'influence sur le résultat final et peut donc être choisie totalement arbitrairement.

*Boucle d'itération (ITE)*

La boucle d'itération comporte trois étapes successives :
Tout d'abord on détermine le taux de vide moyenné sur la section poche ($R_{GP}$), le taux de liquide dans la poche ($R_{LP}$), et la vitesse moyenne du gaz dans la poche ($V_{GP}$) à l'aide d'un modèle physique décrivant la physique de l'écoulement de chaque phase au sein de la poche de gaz.
Puis on détermine le taux de vide moyenné sur la section bouchon ($R_{GB}$), le taux de liquide dans le bouchon ($R_{LB}$), la vitesse moyenne du gaz dans le bouchon ($V_{GB}$), et la vitesse moyenne du liquide dans le bouchon ($V_{LB}$) à l'aide d'un modèle décrivant la physique de l'écoulement de chaque phase au sein des bouchons de liquide.
Enfin, à l'aide des calculs précédents, on détermine le flux de gaz entraîné $\psi_{G,ent}$ à partir du troisième modèle.
Ensuite, ce flux de gaz entraîné $\psi_{G,ent}$ est comparé au flux de gaz moyen $\psi_G$ donné en entrée de la boucle.
On calcule un nouveau flux de gaz moyen $\psi_G$ à partir du flux de gaz entraîné $\psi_{G,ent}$. On peut par exemple prendre la moyenne des deux :

$$\psi_G = \frac{\psi_G + \psi_{G,ent}}{2}$$

Ce nouveau flux de gaz moyen $\psi_G$ est donné en entrée de la boucle, et un nouveau calcul du flux de gaz entraîné $\psi_{G,ent}$ est réalisé. On rappelle que le flux de gaz moyen est le flux de gaz obtenu par l'équation de conservation des flux en écoulement intermittent établi :

$$\psi_G = R_G \left( V_P - V_G \right)$$

Ainsi, en fournissant un nouveau $\psi_G$, on calcule un nouveau taux de vide moyenné sur la section totale, $R_G$. En imposant $\psi_{GB} = \psi_G$ et $\psi_{GP} = \psi_G$, les modèles MB et MP permettent ainsi d'obtenir de nouvelles valeurs pour les vitesses et fraction de gaz et de liquide dans la poche et dans le bouchon.
Les itérations sont arrêtées lorsque le flux de gaz entraîné vérifie un critère de convergence. On peut par exemple choisir le critère suivant :

$$\left| \frac{\psi_{G,ent} - \psi_G}{\psi_G} \right| < 10^{-3}$$

*Calcul des pertes de charges (PDC)*

Ainsi grâce à cette boucle d'itérations, le taux de vide moyen dans le bouchon liquide et dans la poche sont déterminés. Les vitesses des phases dans ces sections sont aussi connues.

La fraction de poche peut alors être déterminée. Elle est définie par : $\beta = \dfrac{L_P}{L_T}$, où $L_P$ est la longueur de la section poche et $L_T = L_P + L_B$ est la longueur totale (poche et bouchon liquide). Elle est calculée à l'aide des résultats de taux de vide: $\beta = \dfrac{R_G - R_{GB}}{R_{GP} - R_{GB}}$.

En écoulement intermittent le gradient de pression total est donné par :

$$\left[\frac{\partial P}{\partial z}\right]_T = \beta \left[\frac{\partial P}{\partial z}\right]_P + (1-\beta)\left[\frac{\partial P}{\partial z}\right]_B,$$

où $\left[\dfrac{\partial P}{\partial z}\right]_P$ et $\left[\dfrac{\partial P}{\partial z}\right]_B$ sont les gradients de pression dans la section poche et dans la section bouchon. Ces gradients de pression dans les sections poche et bouchon dépendent uniquement des paramètres calculés par le modèle (fractions de phase et vitesses des phases dans chaque section). Le modèle permet donc la détermination des pertes de charge

totales, $\left[\dfrac{\partial P}{\partial z}\right]_T$, en écoulement intermittent.

**Dimensionnement adéquat des installations**

A l'aide du modèle on peut tester différents scénarios et ainsi de sélectionner des propriétés d'équipements adéquates pour le transport et la production d'hydrocarbure.

Par exemple, suivant les conditions de production définies par l'opérateur, plusieurs diamètres de conduites peuvent être installés. Parmi cette gamme de diamètres, le modèle selon l'invention permet de sélectionner celui permettant de minimiser les pertes de charges. A titre d'exemple un écoulement de condensât de faible viscosité (0.4 mPa.s) et de tension superficielle égale à 12 mN/m dans une conduite fortement inclinée est considéré. Les débits volumiques de gaz et de liquide sont fixés ($Q_G$=0.1$m^3.s^{-1}$; $Q_L$ =0.02$m^3.s^{-1}$). Dans ces conditions d'écoulement les pertes de charge sont de 7300 kPa/m pour une conduite de diamètre 7.5 cm, alors qu'elles ne sont que de 1500 kPa/m pour une conduite de diamètre 15 cm. La méthode développée ici permet de prédire ce résultat.

La méthode proposée ici trouve aussi des applications dans le dimensionnement des équipements de séparation en sortie de ligne de production pétrolière de type *"Slug Catcher"*. Ces équipements visent à amortir les fluctuations du débit de liquide générées par l'écoulement intermittent. Leur dimensionnement nécessite la connaissance des fractions de gaz et de liquide dans les différentes sections de l'écoulement ainsi que la longueur de la section poche et bouchon.

Ainsi l'invention trouve une application industrielle dans l'exploitation de gisement pétrolier, que ce soit pour dimensionner les conduites de production et de transport d'hydrocarbures, ou pour la simulation du comportement hydrodynamique des conduites de production et de transport de fluides pétroliers.

**Revendications**

1.  Méthode pour dimensionner des installations industrielles où un mélange diphasique comportant une phase liquide et une phase gazeuse s'écoule selon une configuration comportant une succession de bouchons de liquide et de poches de gaz en arrière desquelles du gaz est entraîné, dans laquelle on modélise l'écoulement de chaque phase au sein d'une poche de gaz et l'écoulement de chaque phase au sein d'un bouchon de liquide à l'aide d'un premier modèle physique, et on modélise le flux de gaz entraîné à l'aide d'un second modèle physique, **caractérisé en ce qu'**elle comporte les étapes suivantes :

    - on définit le second modèle physique dans lequel ledit flux de gaz entraîné est proportionnel à une variation de pression entre une poche de gaz et un bouchon de liquide en arrière de cette poche, et dans lequel on prend en compte une condition critique de formation dudit flux de gaz entraîné, définie par une variation de pression telle que des forces de pression engendrées par cette variation de pression soient supérieures à des forces de tension superficielle entre le gaz et le liquide ;
    - on initialise et calibre ledit second modèle à l'aide de mesures expérimentales ;
    - on détermine un gradient de pression dans la poche, un gradient de pression dans le bouchon et le rapport d'une longueur de poche de gaz sur une longueur de bouchon de liquide, à l'aide d'une méthode itérative dans laquelle on ajuste un flux de gaz entraîné $\psi_{G,ent}$, calculé à l'aide dudit second modèle, avec un flux de gaz moyen $\psi_G$ obtenu par une équation de conservation des flux en écoulement intermittent établi à partir dudit premier modèle d'écoulement physique,
    - on détermine des pertes de charges au sein des installations industrielles à l'aide desdits gradients de pression et dudit rapport, et
    - on détermine les dimensions des installations industrielles de façon à minimiser lesdites pertes de charges.

2.  Méthode selon la revendication 1, dans laquelle on détermine le flux de gaz entraîné $\psi_{G,ent}$ en considérant qu'une proportion $K_{\Delta P}$ du travail effectué par les forces de pression est utilisée pour l'entraînement de gaz.

3.  Méthode selon l'une des revendications précédentes, dans laquelle on détermine le flux de gaz entraîné $\psi_{G,ent}$ en prenant en compte une valeur maximale du flux de gaz entraîné via une hypothèse d'écoulement homogène et sans glissement.

4.  Méthode selon l'une des revendications 1 à 3, dans laquelle ledit premier modèle physique comporte un modèle d'écoulement stratifié basé sur l'égalité des gradients de pression dans les deux phases.

5.  Méthode selon l'une des revendications 1 à 3, dans laquelle ledit premier modèle physique comporte un modèle d'écoulement annulaire basé sur l'égalité des gradients de pression dans les deux phases.

6.  Méthode selon l'une des revendications précédentes, dans laquelle ledit premier modèle physique comporte un modèle de type flux de dérive.

7.  Méthode selon l'une des revendications précédentes, dans laquelle la méthode itérative comporte un critère d'arrêt défini par le critère de convergence suivant :

$$\left| \frac{\psi_{G,ent} - \psi_G}{\psi_G} \right| < 10^{-3}.$$

8.  Méthode selon l'une des revendications précédentes, dans laquelle on détermine les dimensions des installations industrielles en déterminant des pertes de charges pour différentes valeurs de propriétés géométriques données d'installations, et l'on sélectionne les installations ayant les propriétés géométriques minimisant les pertes de charges.

9.  Méthode selon l'une des revendications précédentes, dans laquelle les installations industrielles sont des conduites d'effluents pétroliers.

10. Méthode selon l'une des revendications précédentes, dans laquelle les installations industrielles sont des équipements de séparation pétrolière de type *"Slug Catcher",* et dans laquelle on détermine les dimensions de ces équipements de séparation en déterminant des fractions de gaz et de liquide et des longueurs relatives d'une poche et d'un bouchon liquide.

**Fig. 1**

**Fig. 2**

**Fig. 3**

**Fig. 4**

**Office européen des brevets**

**RAPPORT DE RECHERCHE EUROPEENNE**

Numéro de la demande

EP 08 29 0367

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GUET ET AL: "Void fraction in vertical gas-liquid slug flow: Influence of liquid slug content" CHEMICAL ENGINEERING SCIENCE, OXFORD, GB, vol. 61, no. 22, 30 octobre 2006 (2006-10-30), pages 7336-7350, XP005840634 ISSN: 0009-2509 * page 7336, colonne de gauche, ligne 1 - page 7337, colonne de gauche, ligne 8 * ----- | 1 | INV. G05B17/02 |
| A | ORELL A: "Experimental validation of a simple model for gas-liquid slug flow in horizontal pipes" CHEMICAL ENGINEERING SCIENCE, OXFORD, GB, vol. 60, no. 5, mars 2005 (2005-03), pages 1371-1381, XP004878437 ISSN: 0009-2509 ----- | | |
| | | | DOMAINES TECHNIQUES RECHERCHES (IPC) |
| | | | G05B E21B |

Le présent rapport a été établi pour toutes les revendications

| Lieu de la recherche | Date d'achèvement de la recherche | Examinateur |
|---|---|---|
| La Haye | 16 juillet 2008 | Kelperis, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FELIZOLA, H. ; SHOHAM, O.** A unified model for slug flow in upward inclined pipes. *Journal of Energy Ressources and Technology,* 1995, vol. 117, 7-12
- **GOMEZ, L.E. ; SHOHAM, O. ; TAITEL, Y.** Prediction of slug liquid holdup: horizontal to upward vertical flow. *International Journal of Multiphase Flow,* 2000, vol. 26, 517-521
- **BRAUNER, N ; ULLMANN, A.** Modelling of gas entrainment from Taylor bubbles. Part A: slug flow. *International Journal of Multiphase flow,* 2004, vol. 30, 239-272

- **ZUBER, N. ; FINDLAY, J.A.** Average volumetric concentration in two-phase flow systems. *J. Heat Transfer Trans. ASME Ser.,* 1965, vol. 87, 453-468
- **GUET, S. ; OOMS, G. ; OLIEMANS, R.V.A. ; MUDDE, R.F.** Bubble size effect on low liquid input drift flux parameters. *Chemical Engineering Science,* 2004, vol. 59, 3315-3329